(19) Europäisches Patentamt
European Patent Office
Office européen des brevets

(11) EP 3 816 202 A1

(12) EUROPEAN PATENT APPLICATION
published in accordance with Art. 153(4) EPC

(43) Date of publication:
05.05.2021 Bulletin 2021/18

(21) Application number: 19825988.9

(22) Date of filing: 27.06.2019

(51) Int Cl.:
*C08G 18/38* (2006.01) *C08G 75/045* (2016.01)
*G02B 1/04* (2006.01)

(86) International application number:
PCT/JP2019/025552

(87) International publication number:
WO 2020/004534 (02.01.2020 Gazette 2020/01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.06.2018 JP 2018125592

(71) Applicant: Hoya Lens Thailand Ltd.
Pathumthani 12130 (TH)

(72) Inventors:
- IGARI, Masahito
Tokyo 160-8347 (JP)
- YAMASHITA, Teruo
Tokyo 160-8347 (JP)
- WATANABE, Tsuyoshi
Tokyo 160-8347 (JP)

(74) Representative: Beckmann, Claus
Kraus & Weisert
Patentanwälte PartGmbB
Thomas-Wimmer-Ring 15
80539 München (DE)

# (54) CURED OBJECT FOR OPTICAL MEMBER AND OPTICAL MEMBER

(57) A cured product for an optical component obtained by curing a polymerizable composition, in which the polymerizable composition contains a polyene compound, a polyiso(thio)cyanate compound, and a polythiol compound, and a content of a thiourethane bond of the cured product is 30.00% by mass or less.

EP 3 816 202 A1

## Description

### Technical Field

The present invention relates to a cured product for an optical component and an optical component.

### Background Art

A cured product obtained by curing a polymerizable composition containing a polyiso(thio)cyanate compound and a polythiol compound is widely used as various optical components such as lenses (refer to Patent Literature 1, for example).

### Citation List

### Patent Literature

Patent Literature 1: JP 7-252207 A

### Summary of Invention

### Technical Problem

When producing an optical component, a cured product obtained by curing a polymerizable compound may be dyed for the purpose of imparting fashionability, light shielding properties, and the like. However, the cured product of the polymerizable composition containing a polyiso(thio)cyanate compound and a polythiol compound tends to have decreased transparency due to a dyeing treatment.

According to one aspect of the present invention, there is provided a cured product for an optical component, which is a cured product of a polymerizable composition containing a polyiso(thio)cyanate compound and a polythiol compound, in which a decrease in transparency due to a dyeing treatment is suppressed.

### Solution to Problem

A cured product of a polymerizable composition containing a polyiso(thio)cyanate compound and a polythiol compound has a bond represented by the following Formula 1 in a molecule:

[Chem. 1]

(Formula 1)

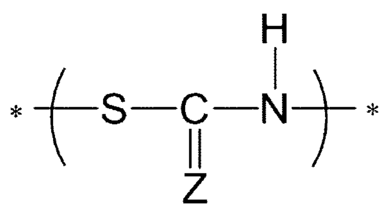

In Formula 1, Z represents an oxygen atom or a sulfur atom. A reaction between the thiol group and the isocyanate group forms the bond in which Z is an oxygen atom. A reaction between the thiol group and the isothiocyanate group forms the bond in which Z is a sulfur atom. The thiourethane bond in the present invention and the present specification means a bond represented by the above Formula 1. In Formula 1, * indicates the position where the thiourethane bond is bonded to another adjacent structure.

As a result of repeated intensive studies by the present inventors, it was newly found that when a polyene compound is contained in a polymerizable composition containing a polyiso(thio)cyanate compound and a polythiol compound, and a content of the thiourethane bond in the cured product of the polymerizable composition is set to 30.00%

by mass or less, it is possible to obtain a cured product in which a decrease in transparency due to a dyeing treatment is suppressed.

That is, one aspect of the present invention relates to a cured product for an optical component (hereinafter, also simply referred to as "cured product") obtained by curing a polymerizable composition, in which the polymerizable composition contains a polyene compound, a polyiso(thio)cyanate compound, and a polythiol compound, a content of a thiourethane bond of the cured product is 30.00% by mass or less.

Advantageous Effects of Invention

According to one aspect of the present invention, there is provided a cured product for an optical component, which is a cured product of a polymerizable composition containing a polyiso(thio)cyanate compound and a polythiol compound, in which a decrease in transparency due to a dyeing treatment is suppressed; and an optical component obtained by dyeing the cured product.

Description of Embodiments

[Cured product for optical component]

A polymerizable composition for obtaining the above cured product contains a polyene compound, a polyiso(thio)cyanate compound, and a polythiol compound.

In the present invention and the specification, the "polyene compound" is referred to as a compound having two or more carbon-carbon double bonds per molecule, and the "polythiol compound" is referred to as a compound having two or more thiol groups per molecule. The cured product of the polymerizable composition containing a polyene compound and a polythiol compound can have a carbon-carbon double bond of the polyene compound and a bond formed by a reaction (hereinafter, described as "thiol-ene reaction") with a thiol group of the polythiol compound.

In the present invention and the present specification, the "polyiso(thio)cyanate compound" refers to a compound having two or more iso(thio)cyanate groups per molecule. "Iso(thio)cyanate" means isocyanate and/or isothiocyanate. The isocyanate is sometimes referred to as isocyanate, and isothiocyanate is sometimes referred to as isothiocyanate. The cured product of a polymerizable composition containing a polyiso(thio)cyanate compound and a polythiol compound can have a thiourethane bond formed by the reaction between an iso(thio)cyanate group of the polyiso(thio)cyanate compound and a thiol group of the polythiol compound (hereinafter, also described as "thiourethane reaction").

<Content of thiourethane bond>

The content of the thiourethane bond of the cured product is 30.00% by mass or less, preferably 28.00% by mass or less, more preferably 25.00% by mass or less, even more preferably 23.00% by mass or less, still more preferably 21.00% by mass or less, even more preferably 20.00% by mass or less, even more preferably 18.00% by mass or less, even more preferably 16.00% by mass or less, even more preferably 14.00% by mass or less, even more preferably 12.00% by mass or less, and even more preferably 10.00% by mass or less, with respect to the mass (100% by mass) of the cured product. Further, the content of the above thiourethane bond can be more than 0% by mass, 1.00% by mass or more, 2.00% by mass or more, 3.00% by mass or more, 4.00% by mass or more, 5.00% by mass or more, 6.00% by mass or more, or 7.00% by mass or more. The low content of the thiourethane bond in the cured product is preferable in terms of suppressing a decrease in transparency due to a dyeing treatment. Further, according to one aspect, the content of the thiourethane bond in the cured product is preferably low from the viewpoint of improving the impact resistance of the cured product. The content of thiourethane bond in the cured product can be determined by a known method. In a case where the composition of the polymerizable composition for obtaining the cured product is known, the content of the thiourethane bond in the cured product can be calculated based on the known composition. The content of the thiourethane bond in the cured product can be adjusted by the composition of the polymerizable composition used to obtain the cured product.

Next, the polymerizable composition for obtaining the cured product will be described in more detail.

<Polymerizable composition>

(Polyene compound)

The number of carbon-carbon double bonds contained in the polyene compound is two or more per molecule, preferably three or more, and can be, for example, three to five. The polyene compound can contain a carbon-carbon double bond in a carbon-carbon double bond-containing group such as a (meth)acrylic group, a vinyl group, and an allyl

group. The carbon-carbon double bond-containing groups contained in the polyene compound may be the same as or different from each other.

Specific examples of the polyene compound include vinyl compounds such as divinylbenzene and divinyltoluene, (meth)acrylates such as ethylene glycol di(meth)acrylate, diethylene glycol di(meth)acrylate, triethylene glycol di(meth)acrylate, trimethylolpropane tri(meth)acrylate, trimethylolpropane di(meth)acrylate, pentaerythritol tri(meth)acrylate, pentaerythritol tetra(meth)acrylate, tetraethylene glycol di(meth)acrylate, isocyanuric acid ethylene oxide modified tri(meth)acrylate, and allyl compounds such as diallyl phthalate, diallyl maleate, triallyl cyanurate, triallyl isocyanurate, triallyl trimellitate, and tetraallyloxyethane. As the polyene compound, the polyene compound may be used singly or in combination of two or more kinds thereof.

The polyene compound can be, for example, an aliphatic compound, an alicyclic compound, an aromatic compound, a heterocyclic compound, or the like. In one aspect, the polyene compound can be a cyclic structure-containing compound. The cyclic structure-containing compound may be a carbocyclic compound, a heterocyclic compound, a monocyclic compound, or a bicyclic or higher polycyclic compound. Moreover, the polyene compound may include a plurality of cyclic structures. In one aspect, the polyene compound can be a heteroalicyclic compound or a heteroaromatic compound, and specifically, an isocyanuric ring-containing compound or a cyanuric ring-containing compound.

The content of the polyene compound in the polymerizable composition can be, for example, more than 0% by mass and 50.00% by mass or less, and preferably 10.00% to 35.00% by mass with respect to the mass (100% by mass) of the polymerizable composition. In the present invention and the present specification, the mass of the polymerizable composition means the mass excluding the solvent when the polymerizable composition contains the solvent.

(Polyiso(thio)cyanate compound)

The polyiso(thio)cyanate compound can be, for example, an aliphatic compound, an alicyclic compound, an aromatic compound, a heterocyclic compound, or the like. The number of iso(thio)cyanate groups contained in the polyiso(thio)cyanate compound is two or more, preferably two to four, and more preferably two or three per one molecule.

The polyiso(thio)cyanate compound can be, for example, an aliphatic compound, an alicyclic compound, an aromatic compound, a heterocyclic compound, or the like. Specific examples of the polyiso(thio)cyanate compound include: an aliphatic polyisocyanate compound such as hexamethylene diisocyanate, 1,5-pentane diisocyanate, isophorone diisocyanate, bis(isocyanatomethyl) cyclohexane, dicyclohexylmethane diisocyanate, 2,5-bis(isocyanatomethyl)-bicyclo [2.2.1]heptane, 2,6-bis(isocyanatomethyl)-bicyclo [2.2.1]heptane, bis(4-isocyanatocyclohexyl) methane, 1,3-bis(isocyanatomethyl) cyclohexane, or 1,4-bis(isocyanatomethyl) cyclohexane; and an aromatic polyisocyanate compound such as xylylene diisocyanate, 1,3-diisocyanatobenzene, tolylene diisocyanate, or diphenylmethane diisocyanate. Furthermore, a halogen substitution product of the polyiso(thio)cyanate compound such as a chlorine substitution product thereof or a bromine substitution product thereof, an alkyl substitution product thereof, an alkoxy substitution product thereof, a prepolymer type modified product thereof with a nitro substitution product or a polyhydric alcohol, a carbodiimide modified product thereof, a urea modified product thereof, a biuret modified product thereof, a dimerization or trimerization reaction product thereof, and the like can be used. As the polyiso(thio)cyanate compound, only one kind of polyiso(thio)cyanate compound may be used, or two or more kinds of polyiso(thio)cyanate compounds may be mixed to be used. In one aspect, the polymerizable composition can contain a cyclic structure-containing compound as a polyiso(thio)cyanate compound. The cyclic structure-containing compound may be a carbocyclic compound, a heterocyclic compound, a monocyclic compound, or a bicyclic or higher polycyclic compound. Moreover, the polyiso(thio)cyanate compound may include a plurality of cyclic structures. In one aspect, the polyiso(thio)cyanate compound can be an aromatic compound (aromatic polyiso(thio)cyanate compound).

The content of the polyiso(thio)cyanate compound in the polymerizable composition can be, for example, more than 0% by mass and 50.00% by mass or less, and preferably 10.00% to 35.00% by mass with respect to the mass (100% by mass) of the polymerizable composition.

(Polythiol compound)

The polythiol compound can be, for example, an aliphatic compound, an alicyclic compound, an aromatic compound, a heterocyclic compound, or the like. The number of thiol groups contained in the polythiol compound is two or more, and preferably two to four per molecule. In addition, the number of thiol groups contained in the polythiol compound is preferably three or more per molecule.

Examples of the polythiol compound include aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis (2-mercaptoacetate), pentaerythritol tetrakis (3-mercaptopropionate), and 1,2-bis(2-mercaptoethylthio)-3-mercaptopropane; aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracene dimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane; halogen-substituted aromatic polythiol compounds such as a chlorine substitution product and a bromine substitution product such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene; aromatic polythiol compounds containing a sulfur atom in addition to a thiol group (also referred to as "mercapto group") such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, and nuclear alkylated product thereof; aliphatic polythiol compounds containing a sulfur atom in addition to a thiol group such as bis(mercaptomethyl)sulfide, bis(mercaptoethyl)sulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio) propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercapto-1,4-dithiane, bis(mercaptomethyl)disulfide, bis(mercaptoethyl)disulfide, bis(mercaptopropyl)disulfide, and esters of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl Sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-3,6-dithiaoctane-1,8-dithiol, bis(1,3-dimercapto-2-propyl) sulfide, bis(mercaptomethyl)-3,6,9-trithiaundecane-1,11-dithiol (also known as "bis(mercaptomethyl)-3,6,9-trithia-1,11-undecandithiol";one of the isomers selected from the group consisting of 4,7-bis(mercaptomethyl)-3,6,9-trithiaundecane-1,11-dithiol, 4,8-bis(mercaptomethyl)-3,6,9-trithial undecane-1,11-dithiol, and 5,7-bis(mercaptomethyl)-3,6,9-trithial undecane-1,11-dithiol, or a mixture of two or three of these isomers); and heterocyclic compounds containing

a sulfur atom in addition to a mercapto group such as 3,4-thiophenedithiol, tetrahydrothiophene-2,5-dimercaptomethyl, 2,5-dimercapto-1,3,4-thiadiazole, 2,5-dimercapto-1,4-dithiane, and 2,5-dimercaptomethyl-1,4-dithiane.

In one aspect, the polythiol compound contained in the polymerizable composition can be an aliphatic compound. Further, in one aspect, the polythiol compound can be an ester bond-containing compound. The polythiol compound containing an ester bond can contain, for example, two or more ester bonds per molecule, for example, 2 to 5 ester bonds. In one aspect, the polythiol compound can be an ester bond-containing aliphatic compound.

The content of the polythiol compound in the polymerizable composition can be, for example, 20.00% to 80.00% by mass, and preferably 30.00% to 70.00% by mass, with respect to the mass (100% by mass) of the polymerizable composition.

(Other components)

The polymerizable composition can optionally contain one or more known components such as additives and polymerization catalysts that are generally used for producing an optical component. Examples of the additives include various additives such as an ultraviolet absorber, an antioxidant, and a release agent. Further, an organic phosphorus compound such as a phosphine derivative can also be used as an additive. The amount of the additive used can be set appropriately.

Further, the polymerizable composition preferably includes, as a polymerization catalyst, a first polymerization catalyst that catalyzes a thiol-ene reaction between a polyene compound and a polythiol compound, and a second polymerization catalyst which catalyzes a thiourethane reaction between a polyiso(thio)cyanate compound and a polythiol compound. As the first polymerization catalyst which catalyzes the thiol-ene reaction and the second polymerization catalyst which catalyzes the thiourethane reaction, known polymerization catalysts can be used.

Examples of the first polymerization catalyst for catalyzing thiol-ene reaction inlcude azobis compounds such as 2,2'-azobisisobutyronitrile, 2,2'-azobis(2-methylbutyronitrile), 2,2'-azobis-2,4-dimethylvaleronitrile, dimethyl-2,2'-azobisisoobtylate, 1,1'-azobis(cyclohexane-1-carbonitrile), 1,1'-azobis(1-acetoxyl-phenylethane), and 2,2'-azobis(4-methoxy-2,4-dimethylvaleronitrile); and peroxide compounds such as benzoyl peroxide, acetyl peroxide, tert-butyl peroxide, propionyl peroxide, lauroyl peroxide, peracetic acid tert-butyl, tert-butyl perbenzoate, tert-butyl hydroperoxide, tert-butyl peroxypivalate, 1,1-bis(t-butylperoxy)-3,3,5-trimethylcyclohexane, t-butylperoxide oxy-2-ethylhexanoate, t-amylperoxy-2-ethylhexanoate, t-amylperisononanoate, t-amylperoxyacetate, and t-amylperoxybenzoate. The polymerizable composition can contain, for example, the first polymerization catalyst in an amount of 0.01% to 0.10% by mass with respect to the mass (100% by mass) of the polymerizable composition.

Examples of the second polymerization catalyst that catalyzes the thiourethane reaction include organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The polymerizable composition can contain, for example, the second polymerization catalyst in an amount of 0.01% to 0.50% by mass with respect to the mass (100% by mass) of the polymerizable composition.

The above-mentioned polymerizable composition can be prepared by simultaneously or sequentially mixing the above-described various components at the same time or in any order. The preparation method is not particularly limited, and any known method for preparing a polymerizable composition can be adopted. Further, the polymerizable composition may be prepared without adding a solvent, or may be prepared by adding an optional amount of the solvent. As the solvent, it is possible to use one or more of known solvents that can be used in the polymerizable composition.

<Method for manufacturing cured product>

The polyene compound, the polyiso(thio)cyanate compound, and the polythiol compound described above are all polymerizable compounds, and by polymerizing these compounds, the polymerizable composition can be cured to obtain a cured product. The cured product thus obtained can be used as various optical components.

For example, examples of the optical component include various lenses such as a spectacle lens, a telescope lens, a binocular lens, a microscope lens, an endoscope lens, and an imaging system lens of various cameras. The "lens" in the present invention and the present specification includes a "lens substrate" in which one or more layers are optionally layered.

For example, cast polymerization is preferable for producing a cured product (also referred to as "plastic lens") having a lens shape. In cast polymerization, a polymerizable composition is injected into a cavity of a molding die having two molds facing each other with a predetermined gap and a cavity formed by closing the gap, and the polymerizable compound contained in the polymerizable composition is polymerized (curing reaction) in the cavity to obtain a cured product. For details of a molding die usable for cast polymerization, for example, refer to paragraphs 0012 to 0014 and Fig. 1 of JP 2009-262480 A. Note that the publication describes a molding die in which the gap between the two molds is closed with a gasket as a sealing member, but a tape can also be used as the sealing member.

In an aspect, cast polymerization can be performed as follows. The polymerizable composition is injected into a molding die cavity from an injection port formed on a side surface of the molding die. After the injection, by polymerizing (curing reaction) the polymerizable compound contained in the polymerizable composition preferably by heating, the polymerizable composition is cured to obtain a cured product having an internal shape of the cavity transferred thereon. A polymerization condition is not particularly limited, and can be appropriately set depending on the composition of a polymerizable composition or the like. As an example, a molding die having a polymerizable composition injected into a cavity can be heated at a heating temperature of 20°C to 150°C for about 1 to 72 hours, but the polymerization condition is not limited thereto. In the present invention and the present specification, the temperature such as a heating temperature for cast polymerization refers to a temperature of an atmosphere in which a molding die is placed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used as an optical component after posttreatment as necessary, and can be used as, for example, various lenses (for example, lens substrate). As an example, the cured product used as a lens substrate of a spectacle lens can be usually subjected to a post-step such as annealing, a dyeing treatment, a grinding step such as a rounding step, a polishing step, or a step of forming a coat layer such as a primer coat layer for improving impact resistance or a hard coat layer for improving surface hardness after releasing. Furthermore, various functional layers such as an antireflection layer and a water-repellent layer can be formed on the lens substrate. A known technique can be applied to any of these steps. In this way, a spectacle lens of which a lens substrate is the cured product can be obtained. Furthermore, by mounting this spectacle lens in a frame, eyeglasses can be obtained.

The cured product can be preferably subjected to a dyeing treatment. The cured product can exhibit high transparency after the dyeing treatment. The high transparency can be evaluated by, for example, the presence or absence of white turbidity visually observed. The dyeing treatment can be performed, for example, by immersing the cured product in a dyeing bath containing a dye. The dyeing bath can be prepared, for example, by diluting a commercially available dye with a solvent as needed. Furthermore, a known additive such as surfactant can also be added to the dyeing bath as needed. The temperature of the dyeing bath can be, for example, in a range of 30°C to 100°C. Immersion time of the cured product in the dyeing bath is not particularly limited, and is, for example, about one minute to one hour. Further, after the dyeing treatment, a heat treatment may be performed to fix the dye. The heating temperature in this heat treatment (for example, an atmospheric temperature in a furnace of a heating furnace for performing the heat treatment) is, for example, 30°C to 120°C, and the heat treatment time is, for example, 15 minutes to 2 hours, but there is no particular limitation. In addition, after the dyeing treatment, washing or one or more of the post-steps exemplified above can be performed, if necessary.

[Optical component]

One aspect of the present invention relates to an optical component obtained by dyeing the cured product. The above description can be referred to for the details of the optical component such as the cured product and the dyeing treatment.

## Examples

Hereinafter, the present invention will be described in more detail with Examples, but the present invention is not limited to aspects indicated by Examples. Operation and evaluation described below were performed in air at room temperature (about 20°C to 25°C) unless otherwise specified. In addition, % described below are on a mass basis unless otherwise specified.

[Comparative Example 1]

44.6 g of 2,4-tolylene diisocyanate (TDI) as a polyisocyanate compound, 0.30 g of triphenylphosphine (TPP) as an organic phosphorus compound, 0.15 g of butoxyethyl acid phosphate as a release agent (JP-506H, available from Johoku Chemical Co.,Ltd), and 0.04 g of dimethyltin dichloride as a polymerization catalyst were added to a 300 ml eggplant-shaped flask, and stirring was continued for one hour under nitrogen purge at 20°C. When these were completely dissolved, 55.4g of pentaerythritol tetrakis (2-mercaptoacetate) (PETMA) was blended as a polythiol compound, and the mixture was stirred under reduced pressure for 20 minutes at 0.13 kPa (1.0 Torr) to prepare a polymerizable composition which contains a polyisocyanate compound and a polythiol compound and does not contain a polyene compound.

This polymerizable composition was injected into the cavity of the molding die through a polytetrafluoroethylene

membrane filter having a pore diameter of 1.0 μm, and cast polymerization was carried out for 24 hours at a temperature program from an initial temperature of 25°C to a final temperature of 120°C to produce a plastic lens having a center thickness of 2 mm.

The content of thiourethane bonds in the plastic lens thus produced is 38.42% by mass.

The produced plastic lens was released from the molding die and then subjected to a dyeing treatment under the following conditions. When the plastic lens after the dyeing treatment was visually observed, clear white turbidity was confirmed.

(Dyeing conditions)

Dye: Brown dye aqueous solution
Temperature of dyeing bath: 81°C
Dyeing time (immersion time in dyeing bath): 10 minutes

[Example 1]

10.9 g of 2,4-tolylene diisocyanate (TDI) as a polyiso(thio)cyanate compound, 32.8 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.01 g of dimethyltin dichloride, and 0.02 g of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 56.3 g of pentaerythritol tetrakis (2-mercaptoacetate) (PETMA) was added as a polythiol compound, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 μm, and cast polymerization was carried out for 24 hours at a temperature program from an initial temperature of 25°C to a final temperature of 120°C to produce a plastic lens having a center thickness of 2 mm.

The content of thiourethane bonds in the plastic lens thus produced is 9.41% by mass.

The produced plastic lens was released from the molding die and then subjected to a dyeing treatment under the above-mentioned conditions. When the plastic lens after the dyeing treatment was visually observed, white turbidity was not confirmed.

[Example 2]

22.0 g of 2,4-tolylene diisocyanate (TDI) as a polyiso(thio)cyanate compound, 22.0 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.02 g of dimethyltin dichloride, and 0.02 g of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 56.0 g of pentaerythritol tetrakis (2-mercaptoacetate) (PETMA) was added as a polythiol compound, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 μm, and cast polymerization was carried out for 24 hours at a temperature program from an initial temperature of 25°C to a final temperature of 120°C to produce a plastic lens having a center thickness of 2 mm.

The content of thiourethane bonds in the plastic lens thus produced is 18.98% by mass.

The produced plastic lens was released from the molding die and then subjected to a dyeing treatment under the above-mentioned conditions. When the plastic lens after the dyeing treatment was visually observed, white turbidity was not confirmed.

[Example 3]

33.2 g of 2,4-tolylene diisocyanate (TDI) as a polyiso(thio)cyanate compound, 11.1 g of triallyl isocyanurate (TAIC) as a polyene compound, and 0.30 g of triphenylphosphine (TPP) as an organic phosphorus compound, 0.15 g

of butoxyethyl acid phosphate as a release agent (JP-506H, available from Johoku Chemical Co.,Ltd), 0.03 g of dimethyltin dichloride, and 0.02 g of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 55.7 g of pentaerythritol tetrakis (2-mercaptoacetate) (PETMA) was added as a polythiol compound, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 μm, and cast polymerization was carried out for 24 hours at a temperature program from an initial temperature of 25°C to a final temperature of 120°C to produce a plastic lens having a center thickness of 2 mm.

The content of thiourethane bonds in the plastic lens thus produced is 28.74% by mass.

The produced plastic lens was released from the molding die and then subjected to a dyeing treatment under the above-mentioned conditions. When the plastic lens after the dyeing treatment was visually observed, a slight white turbidity that was acceptable as a spectacle lens was confirmed.

[Example 4]

24.0 g of 2,4-tolylene diisocyanate (TDI) as a polyiso(thio)cyanate compound, 24.0 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.01 g of dimethyltin dichloride, and 0.08 g of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 52.0 g of bis(mercaptomethyl)-3,6,9-trithiaundecane-1,11-dithiol as a polythiol compound was added, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 μm, and cast polymerization was carried out for 24 hours at a temperature program from an initial temperature of 25°C to a final temperature of 125°C to produce a plastic lens having a center thickness of 2 mm.

The content of thiourethane bonds in the plastic lens thus produced is 20.71% by mass.

The produced plastic lens was released from the molding die and then subjected to a dyeing treatment under the above-mentioned conditions. When the plastic lens after the dyeing treatment was visually observed, a slight white turbidity (lighter white turbidity than that in Example 3) that was acceptable as a spectacle lens was confirmed.

[Example 5]

11.5 g of 2,4-tolylene diisocyanate (TDI) as a polyiso(thio)cyanate compound, 35.0 g of triallyl isocyanurate (TAIC) as a polyene compound, and 0.30 g of triphenylphosphine (TPP) as an organic phosphorus compound, 0.15 g of butoxyethyl acid phosphate as a release agent (JP-506H, available from Johoku Chemical Co.,Ltd), 0.01 g of dimethyltin dichloride, and 0.08 g of 2,2'-azobis-2,4-dimethylvaleronitrile as a polymerization catalyst were added to a 300 ml eggplant-shaped flask, and stirring was continued for one hour under nitrogen purge at 20°C. When these were completely dissolved, 52.5 g of bis(mercaptomethyl)-3,6,9-trithiaundecane-1,11-dithiol as a polythiol compound was added, and the mixture was stirred under reduced pressure for 20 minutes at 0.13 kPa (1.0 Torr) to prepare a polymerizable composition which contains a polyene compound, a polyiso(thio)cyanate compound, and a polythiol compound.

This polymerizable composition was injected into the cavity of the molding die through a polytetrafluoroethylene membrane filter having a pore diameter of 1.0 μm, and cast polymerization was carried out for 24 hours at a temperature program from an initial temperature of 25°C to a final temperature of 125°C to produce a plastic lens having a center thickness of 2 mm.

The content of thiourethane bonds in the plastic lens thus produced is 9.93% by mass.

The produced plastic lens was released from the molding die and then subjected to a dyeing treatment under the above-mentioned conditions. When the plastic lens after the dyeing treatment was visually observed, white turbidity was not confirmed.

The plastic lenses of Examples 1 to 5 and the plastic lens of Comparative Example 1 were both produced from a polymerizable composition containing a polyiso(thio)cyanate compound and a polythiol compound, but produced from a polymerizable composition also containing a polyene compound. The plastic lenses of Examples 1 to 5 having a thiourethane bond content of 30.00% by mass or less is a plastic lens in which white turbidity after the dyeing treatment was suppressed as compared with the plastic lens of Comparative Example 1, or no white turbidity was observed. The plastic lenses of Examples 1 to 5 described above are suitable as various optical components such as spectacle lenses

that are desired to have high transparency. For example, a spectacle lens having high transparency can be produced by using the plastic lens of Examples 1 to 5 as a lens substrate.

[Reference Example 1]

43.5 g of triallyl isocyanurate (TAIC) as a polyene compound, 0.30 g of triphenylphosphine (TPP) as an organic phosphorus compound, 0.15 g of butoxyethyl acid phosphate as a release agent (JP-506H, available from Johoku Chemical Co.,Ltd), and 0.02g of 2,2'-azobisu 2,4-dimethylvaleronitrile as a polymerization catalyst were added to a 300 ml eggplant-shaped flask, and stirring was continued for one hour under nitrogen purge at 20°C. When these were completely dissolved, 56.5 g of pentaerythritol tetrakis (2-mercaptoacetate) (PETMA) was blended as a polythiol compound, and the mixture was stirred under reduced pressure for 20 minutes at 0.13 kPa (1.0 Torr) to prepare a polymerizable composition which contains a polyene compound and a polythiol compound and does not contain a polyiso(thio)cyanate compound.

This polymerizable composition was injected into the cavity of the molding die through a polytetrafluoroethylene membrane filter having a pore diameter of 1.0 $\mu$m, and cast polymerization was carried out for 24 hours at a temperature program from an initial temperature of 25°C to a final temperature of 120°C to produce a plastic lens having a center thickness of 2 mm.

The content of thiourethane bonds in the plastic lens thus produced is 0% by mass.

The produced plastic lens was released from the molding die and then subjected to a dyeing treatment under the above-mentioned conditions. When the plastic lens after the dyeing treatment was visually observed, white turbidity was not confirmed.

The polymerizable compositions prepared in Examples 1 to 5 and Comparative Example 1, respectively, include various polymerizable compounds at a molar ratio at which the total amount of the isocyanate groups of the polyiso(thio)cyanate compound is able to react with the thiol group contained in the polythiol compound. The content of the thiourethane bond is a value calculated by the following formula, assuming that the total amount of the isocyanate groups of the polyiso(thio)cyanate compound reacts to generate a thiourethane bond.

The content of thiourethane bond = (mass of thiourethane bond to be generated/total mass of polymerizable composition) x 100

Since the polymerizable composition prepared in Reference Example 1 does not contain a polyiso(thio)cyanate compound, the content of the thiourethane bond of the plastic lens of Reference Example 1 obtained from this polymerizable composition is 0% by mass.

Each of the polymerizable compositions prepared in Examples 1 to 5 and Comparative Example 1 was injected into the cavity of the molding die through a polytetrafluoroethylene membrane filter having a pore diameter of 1.0 $\mu$m, and cast polymerization was carried out for 24 hours at a temperature program from an initial temperature of 25°C to a final temperature of 120°C to produce a plastic lens having a center thickness of 1.0 mm or less and a lens power of -4.00D (diopter).

For each produced plastic lens, a test according to a drop ball test defined by the US Food and Drug Administration (FDA) (an iron ball weighing 16 g was dropped from a height of 127 cm) was performed, and the lens after the test was visually observed, and the impact resistance was evaluated according to the following criteria. A result therefrom is illustrated in Table 1.

(Evaluation Criteria)

A: Appearance of lens after test is the same as that of lens before test.

B: Surface of lens was scratched or cracked after test.

C: Surface of lens was cracked after test.

[Table 1]

| | Content (%) of thiourethane bond | Impact resistance |
|---|---|---|
| Example 1 | 9.41 | A |
| Example 2 | 18.98 | A |
| Example 3 | 28.74 | B |
| Example 4 | 20.71 | A |
| Example 5 | 9.93 | A |
| Comparative Example 1 | 38.42 | C |

From the results indicated in Table 1, it can be confirmed that the plastic lenses of Examples 1 to 5 are excellent in the impact resistance to the plastic lenses of Comparative Example 1. For example, if the cured product used as the lens substrate of the spectacle lens is excellent in the impact resistance, it is preferable because the spectacle lens having the excellent impact resistance can be obtained with a thinner primer coat layer, or without providing such a coat layer for improving the impact resistance.
Finally, the above-described aspects will be summarized.
According to one aspect, there is provided a cured product for an optical component obtained by curing a polymerizable composition, in which the polymerizable composition contains a polyene compound, a polyiso(thio)cyanate compound, and a polythiol compound, a content of a thiourethane bond of the cured product is 30.00% by mass or less.
The cured product can have high transparency even after the dyeing treatment.
In one aspect, the polyene compound can be a cyclic structure-containing compound.
In one aspect, the cyclic structure can be an isocyanuric ring.
In one aspect, the polyene compound can be an allyl compound.
In one aspect, the polyene compound can be a compound containing three or more carbon-carbon double bonds per molecule.
In one aspect, the polythiol compound can be an aliphatic compound.
In one aspect, the polythiol compound can be a compound containing three or more thiol groups per molecule.
In one aspect, the polyiso(thio)cyanate compound can be an aromatic compound.
In one aspect, the optical component can be a lens.
In one aspect, the lens can be a spectacle lens.
According to one aspect, there is provided an optical component obtained by dyeing the cured product.
The optical component may have high transparency.
The various aspects described in this specification can be combined in two or more in any combination.
The embodiment disclosed here is exemplary in all respects, and it should be considered that the embodiment is not restrictive. The scope of the present invention is defined not by the above description but by claims, and intends to include all modifications within meaning and a scope equal to claims.

Industrial Applicability

An aspect of the present invention is useful in the field of producing various kinds of optical components such as a spectacle lens.

## Claims

1. A cured product for an optical component obtained by curing a polymerizable composition,
wherein the polymerizable composition contains a polyene compound, a polyiso(thio)cyanate compound, and a polythiol compound, and
a content of a thiourethane bond of the cured product is 30.00% by mass or less.

2. The cured product for an optical component according to claim 1,
wherein the polyene compound is a cyclic structure-containing compound.

3. The cured product for an optical component according to claim 2,

wherein the cyclic structure is an isocyanuric ring.

4. The cured product for an optical component according to any one of claims 1 to 3, wherein the polyene compound is an allyl compound.

5. The cured product for an optical component according to any one of claims 1 to 4, wherein the polyene compound is a compound containing three or more carbon-carbon double bonds per molecule.

6. The cured product for an optical component according to any one of claims 1 to 5, wherein the polythiol compound is an aliphatic compound.

7. The cured product for an optical component according to any one of claims 1 to 6, wherein the polythiol compound is a compound containing three or more thiol groups per molecule.

8. The cured product for an optical component according to any one of claims 1 to 7, wherein the polyiso(thio)cyanate compound is an aromatic compound.

9. The cured product for an optical component according to any one of claims 1 to 8, wherein the optical component is a lens.

10. The cured product for an optical component according to claim 9, wherein the lens is a spectacle lens.

11. An optical component obtained by dyeing the cured product according to any one of claims 1 to 10.

## INTERNATIONAL SEARCH REPORT

International application No. PCT/JP2019/025552

A. CLASSIFICATION OF SUBJECT MATTER
Int.Cl. C08G18/38(2006.01)i, C08G75/045(2016.01)i, G02B1/04(2006.01)i

According to International Patent Classification (IPC) or to both national classification and IPC

B. FIELDS SEARCHED

Minimum documentation searched (classification system followed by classification symbols)
Int.Cl. C08G18/00-18/87, C08G75/00-75/32, G02B1/00-1/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 10-114825 A (MITSUI TOATSU CHEMICALS, INC.) 06 May 1998, claims, column "examples" (for example, comparative example 7, example 9), etc. & EP 802208 A1 & US 5908876 A, claims, comparative example 7, example 9 | 1-11 |
| X | JP 9-71625 A (MITSUI TOATSU CHEMICALS, INC.) 18 March 1997, claims, column "examples" (for example, example 14), etc. & EP 751161 A2 & US 5736609 A, claims, example 14 | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 September 2019 (19.09.2019) | 01 October 2019 (01.10.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2019/025552

C (Continuation). DOCUMENTS CONSIDERED TO BE RELEVANT

| Category* | Citation of document, with indication, where appropriate, of the relevant passages | Relevant to claim No. |
|---|---|---|
| X | JP 5-25240 A (MITSUBISHI RAYON CO., LTD.) 02 February 1993, claims, column "examples" (for example, example 3, comparative example 5), etc. (Family: none) | 1-11 |
| X | JP 5-287050 A (MITSUBISHI YUKA KABUSHIKI KAISHA) 02 November 1993, claims, column "examples" (for example, example 1), etc. (Family: none) | 1-11 |
| X | JP 3-79614 A (KUREHA CHEMICAL INDUSTRY CO., LTD.) 04 April 1991, claims, column "examples" (for example, examples 3, 4), etc. (Family: none) | 1-11 |
| X | JP 10-146849 A (MITSUI TOATSU CHEMICALS, INC.) 02 June 1998, claims, column "examples" (for example, example 5), etc. (Family: none) | 1-11 |
| X | JP 3-236386 A (HOYA CORP.) 22 October 1991, claims, column "examples" (for example, example 9), etc. & EP 435306 A2 & US 5326501 A, claims, example 9 | 1-11 |
| X | JP 2003-105227 A (NIPPON OIL & FATS CO., LTD.) 09 April 2003, claims, column "examples" (for example, example 39), etc. (Family: none) | 1-11 |
| X | JP 2002-241464 A (NIPPON OIL & FATS CO., LTD.) 28 August 2002, claims, column "examples" (for example, example 5), etc. (Family: none) | 1-11 |
| X | WO 2000/073365 A1 (NIPPON OIL & FATS CO., LTD.) 07 December 2000, claims, column "examples" (for example, example 13), etc. & EP 1116735 A1 & US 6417273 B1, claims, example 13 | 1-11 |
| X | JP 2001-174601 A (HOYA CORP.) 29 June 2001, claims, column "examples" (for example, example 1), etc. (Family: none) | 1-11 |
| X | JP 57-80428 A (SUMITOMO BAKELITE CO., LTD.) 20 May 1982, claims, column "examples" (Family: none) | 1-11 |
| X<br>A | JP 61-159462 A (LOCTITE (IRELAND) LTD.) 19 July 1986, claims, column "examples" (for example, example 1), etc. & US 4668713 A, claims, example 1 & EP 188880 A2 | 1-10<br>11 |
| X | JP 7-228659 A (MITSUI TOATSU CHEMICALS, INC.) 29 August 1995, claims, column "examples" (for example, example 1), etc. & EP 659790 A1 & US 5578658 A, claims, example 1 | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7252207 A
- JP 2009262480 A